# EUROPÄISCHE PATENTSCHRIFT

(11) **EP 1 398 230 B1**
(45) Veröffentlichungstag und Bekanntmachung des Hinweises auf die Patenterteilung: **20.08.2008**
(21) Anmeldenummer: 03006172.5
(22) Anmeldetag: 13.03.2003
(51) Int. Cl.: B60S 1/08

(54) **Regensensor insbesondere für ein Kraftfahrzeug mit einer Scheibenwischvorrichtung sowie Verfahren zum Steuern einer Scheibenwischvorrichtung**
Rain sensor, in particular for a vehicle with a windscreen wiper device and method of controlling a windscreen wiper device
Capteur de pluie, en particulier pour un véhicule avec un dispositif d'essuie-glace et méthode de commande d'un dispositif d'essuie-glace

(30) Priorität: 13.09.2002 DE 10242688
(43) Veröffentlichungstag der Anmeldung: 17.03.2004
(73) Patentinhaber: ROBERT BOSCH GMBH, 70442 Stuttgart (DE)
(72) Erfinder: Schmitt, Patrick, 77839 Lichtenau (DE); Hodapp, Bruno, 77855 Achern-Oensbach (DE); Meier, Hans, 77833 Ottersweier (DE); Blitzke, Henry, 77815 Buehl (DE)

(56) Entgegenhaltungen:
- EP-A- 0 537 471
- DE-A- 19 723 859
- US-A- 5 017 847
- PATENT ABSTRACTS OF JAPAN Bd. 012, Nr. 197 (M-706), 8. Juni 1988 (1988-06-08) & JP 63 002758 A (NISSAN MOTOR CO LTD), 7. Januar 1988 (1988-01-07)
- PATENT ABSTRACTS OF JAPAN Bd. 017, Nr. 237 (M-1408), 13. Mai 1993 (1993-05-13) & JP 04 362448 A (FUJITSU TEN LTD), 15. Dezember 1992 (1992-12-15)

## Beschreibung

### Stand der Technik

Die Erfindung betrifft einen Regensensor, insbesondere für ein Kraftfahrzeug mit einer Scheibenvorrichtung sowie ein Verfahren zum Steuern einer Scheibenwischvorrichtung nach Gattung der unabhängigen Ansprüche.

Es sind schon zahlreiche Regensensoren für Kraftfahrzeuge mit Scheibenwischvorrichtungen bekannt, die ein Messelement aufweisen, welches eine, von einer Steuereinrichtung vorgebbare Empfindlichkeit aufweist. Beispielsweise ist aus der DE 197,23,859 A1 ein Regensensor bekannt, bei dem mittels einer Fotozelle Tag und Nacht erkannt werden und die Auslöseempfindlichkeit des Regensensors gesteuert wird. Weiterhin ist bekannt, die Empfindlichkeit des Messelementes des Regensensors in Abhängigkeit des detektierten Signals und damit der Regenintensität zu verändern.

Aus der DE-A-3926175 ist ein Regensensor bekannt, der ein Messelement aufweist, welches aus einer schwingfähigen Platte und einem daran befestigten piezoelektrischen Element und einem Signalverstärker besteht. Durch die kinetische Energie aufprallender Niederschläge ist in Abhängigkeit von der Masse der Tropfen und von der Aufprallgeschwindigkeit eine Scheibenwischvorrichtung eines Kraftfahrzeugs steuerbar. Hierbei wird ein an die Geschwindigkeit des Kraftfahrzeugs charakterisierendes Signal berücksichtigt.

### Vorteile der Erfindung

Der erfindungsgemäße Regensensor mit den Merkmalen des Hauptanspruchs hat den Vorteil, dass die Empfindlichkeit des Messelementes des Regensensors in Abhängigkeit von der Geschwindigkeit des Kraftfahrzeugs steuerbar ist und insbesondere bei niederen Geschwindigkeiten eine höhere Empfindlichkeit des Messelementes eingestellt werden kann. Auf diese Weise wird die subjektive Empfindlichkeit des Regensensors verbessert, da bei niederen Geschwindigkeiten sich kein Effekt durch Fahrtwind einstellt, der die Tropfen zerfließen lässt.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Empfindlichkeit dann erhöht wird, wenn die Geschwindigkeit sehr klein, insbesondere kleiner als 5 km/h oder sogar kleiner als 3 km/h ist. Damit ist die Empfindlichkeit schon dann erhöht, wenn beispielsweise mit sehr langsamer Geschwindigkeit in einem Stau oder an einer Ampel gefahren wird, wodurch sich ein verbessertes Wischverhalten ergibt.

Weist die Steuereinrichtung eine Einzelwischstufe auf, in der jeweils ein einzelner Wischzyklus auslösbar ist und wird die Empfindlichkeit in dieser Betriebsstufe erhöht, so ergibt sich ein besonders feinfühlig abstimmendes Wischbild.

Hierbei ist es als besonders vorteilhaft anzusehen, wenn die Steuereinrichtung die Empfindlichkeit dann erhöht, wenn seit dem letzten Wischzyklus eine längere Zeitspanne, insbesondere von mindestens 5 Sekunden vergangen ist. Auf diese Weise wird besonders wirksam ein Zuwachsen der Scheibe bei längeren Wischpausen vermieden.

Das erfindungsgemäße Verfahren mit den Merkmalen des Anspruchs 5 hat den Vorteil, dass der Steuereinrichtung ein die Geschwindigkeit charakterisierendes Signal zugeführt wird und die Empfindlichkeit des Messelementes bei niedriger Geschwindigkeit erhöht wird. Damit wird eine subjektiv gleichmäßigere Empfindlichkeit erzielt wird.

Wird die Empfindlichkeit erhöht, wenn die Geschwindigkeit klein, insbesondere kleiner als 5 km/h oder sogar als kleiner 3 km/h ist, so kann ein störendes "Zuwachsen" der Scheibe bei niederen Geschwindigkeiten verhindert werden. Führt die Scheibenwischvorrichtung einzelne Wischzyklen durch und erhöht die Empfindlichkeit zwischen den einzelnen Wischzyklen, so wird das Wischbild für den Fahrer wirksam verbessert.

Besonders vorteilhaft ist es, wenn die Empfindlichkeit dann erhöht wird, wenn seit dem letzten Wischzyklus eine längere Zeitspanne von insbesondere mindestens 5 Sekunden vergangen ist, um beim Halten an einer Ampel oder im Stau bei geringen Regenmengen immer über eine saubere Scheibe zu verfügen.

### Zeichnungen

Ein Ausführungsbeispiel der Erfindung ist in den Zeichnungen dargestellt und in der nachfolgenden Beschreibung näher erläutert.
Es zeigen:
Figur 1 einen erfindungsgemäßen Regensensor in schematischer Darstellung,
Figur 2a einen beispielhaften Geschwindigkeitsverlauf über der Zeit,
Figur 2b ein Verlauf der Empfindlichkeit über der Zeit korrespondierend zu Figur 2a,
Figur 3a einen beispielhaften Verlauf der Geschwindigkeit über der Zeit,
Figur 3b die Wischaktivität über der Zeit, bei einem Profil gemäß Figur 3a und
Figur 3c die Empfindlichkeit über der Zeit entsprechend einem Geschwindigkeitsprofil aus Figur 3a.

### Beschreibung des Ausführungsbeispiels

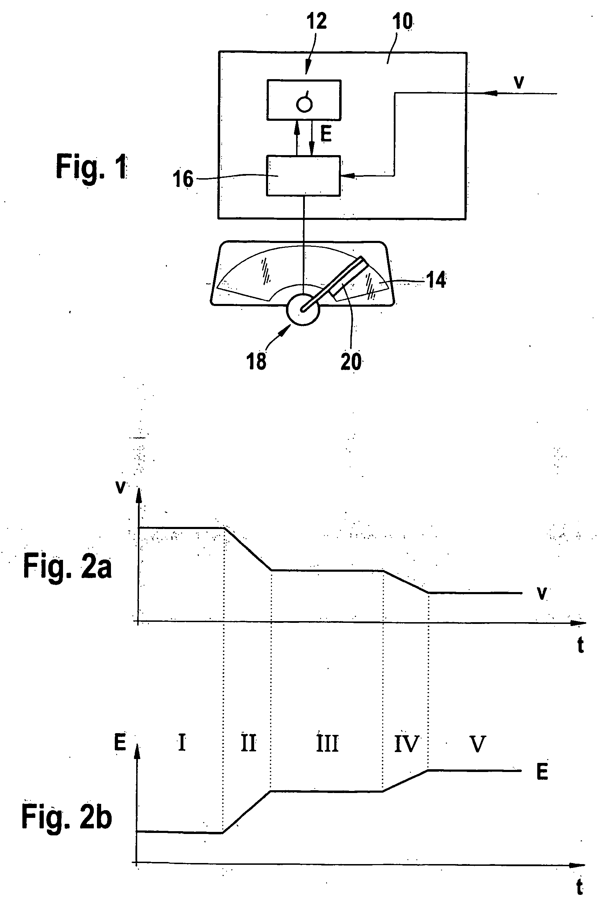

In Figur 1 ist ein erfindungsgemäßer Regensensor 10 in einer schematischen Darstellung gezeigt. Dieser umfasst im Wesentlichen ein Messelement 12, welches in der Lage ist, Feuchtigkeit auf einer Scheibe 14, insbesondere der Windschutzscheibe eines Kraftfahrzeugs, zu detektieren. Das Messelement 12 ist mit einer Steuereinrichtung 16 verbunden, die darüber hinaus mit einer hier nicht gezeigten Tachometereinrichtung verbunden ist. Diese Tachometereinrichtung übermittelt ein für die Geschwindigkeit des Kraftfahrzeugs charakterisierendes Signal v an die Steuereinrichtung 16. Die Steuereinrichtung 16 ist darüber hinaus mit einer Scheibenwischvorrichtung 18 verbunden, die zumindest einen Scheibenwischer 20 aufweist, der im Betrieb über die Scheibe 14 streift und Feuchtigkeit von dieser abstreift. Typischerweise ist das Messelement 12 in dem Bereich der Scheibe 14 angeordnet, der vom Scheibenwischer 20 überstrichen wird.

Erfindungsgemäß ist die Steuereinrichtung 16 derart ausgebildet, dass sie die Empfindlichkeit E des Messelementes 12 vorgeben kann. Bei optischen Sensoren, bei denen eine Sendediode Licht in die Scheibe 14 einkoppelt, welches auf einer trockenen Scheibe total reflektiert und auf einem Empfänger fokussiert wird, kann dies beispielsweise dadurch geschehen, dass die Sendeleistung der Sendediode erhöht wird oder der Temperaturgang, also die Nachführgeschwindigkeit des Referenzwertes, zur Kompensation temperaturabhängiger Signaländerungen, verlangsamt wird.

In Figur 2a ist ein exemplarischer Geschwindigkeitsverlauf über der Zeit aufgezeichnet, unter der Maßgabe, dass das Signal v proportional zur Fahrzeuggeschwindigkeit ist. In Figur 2b ist korrespondierend zum Geschwindigkeitsverlauf aus Figur 2a die Empfindlichkeit E des Messelementes 12 aufgezeichnet. In einem ersten Bereich I ist die Geschwindigkeit konstant und somit auch die Empfindlichkeit E konstant. In einem zweiten Bereich II fällt die Geschwindigkeit ab und entsprechend steigt die Empfindlichkeit E des Messelementes 12 an. In einem dritten Bereich wiederum ist die Geschwindigkeit konstant, aber niedriger als im ersten Bereich. Entsprechend ist die Empfindlichkeit E des Messelementes 12 im dritten Bereich konstant und auf einem höheren Niveau als im ersten Bereich. Für den vierten Bereich gilt das Gleiche für den zweiten Bereich, ebenso gilt für den fünften Bereich das Gleiche für den ersten und dritten Bereich, jedoch befindet sich hier die Geschwindigkeit auf einem noch niedrigeren Niveau, so dass auch die Empfindlichkeit E ein Maximalmaß erreicht.

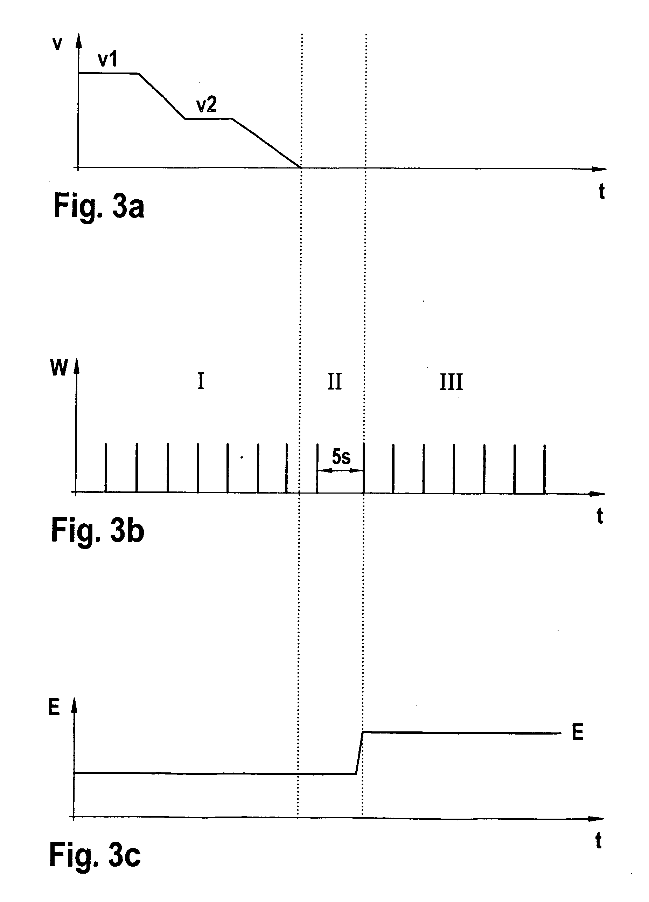

In der Figur 3a ist exemplarisch den Verlauf der Geschwindigkeit über der Zeit, in Figur 3b die Wischaktivität des Scheibenwischers 20 über der Zeit aufgezeichnet, wobei jeder Peak einem durchgeführten Wischzyklus entspricht. Figur 3c zeigt die Empfindlichkeit E über der Zeit.

In einem ersten Bereich I fährt das Kraftfahrzeug mit einer Geschwindigkeit v1, wird anschließend etwas langsamer, fährt dann mit einer Geschwindigkeit v2 und wird anschließend wieder etwas langsamer, bis es zum Stillstand kommt. Während dieser gesammten Zeit ist die Wischaktivität im Wesentlichen konstant, beispielsweise wird alle 3 Sekunden ein neuer Wischzyklus ausgelöst. Dies rührt daher, dass durch den Fahrwind ständig Feuchtigkeitstropfen in den Detektionsbereich des Messelementes 12 gelangen und somit regelmäßig Wischzyklen auslösen. Im zweiten Bereich II ist das Kraftfahrzeug in Ruhe. Da vom Fahrtwind nun keine Feuchtigkeitstropfen mehr in den Bereich des Messelementes 12 driften, kommt es zu einer längeren Wischpause von beispielsweise 5 Sekunden. Die Steuereinrichtung 16 erhöht daraufhin die Empfindlichkeit (E), wie in Figur 3c zu sehen. In diesem dritten Bereich III ist die Empfindlichkeit E derart erhöht, so dass die Wischaktivität etwa der Wischaktivität aus dem ersten Abschnitt I entspricht. Auf diese Weise ergibt sich ein, für den Fahrer gleichmäßigerer Wischverlauf.

## Patentansprüche

1. Regensensor (10) und Steuereinrichtung (16), insbesondere für ein Kraftfahrzeug mit einer Scheibenwischvorrichtung, mit einem Messelement (12), welches eine, von der Steuereinrichtung (16) vorgebbare Empfindlichkeit (E) aufweist, wobei eine Sendediode vorgesehen ist, die Licht in eine Scheibe (14) einkoppelt, welches auf einer trockenen Scheibe (14) totalreflektiert und auf einen Empfänger fokussiert wird, **dadurch gekennzeichnet, dass** der Steuereinrichtung (16) ein die Geschwindigkeit des Kraftfahrzeugs charakterisierendes Signal (v) zuführbar ist und die Steuereinrichtung (16) die Empfindlichkeit (E) des Messelementes (12) bei niedrigerer Geschwindigkeit erhöht.

2. Regensensor und Steuereinrichtung (16) nach Anspruch 1, **dadurch gekennzeichnet, dass** die Steuereinrichtung (16) die Empfindlichkeit (E) dann erhöht, wenn die Geschwindigkeit klein, insbesondere kleiner als 5 km/h, vorzugsweise kleiner als 3 km/h ist.

3. Regensensor (10) und Steuereinrichtung (16), nach Anspruch 1 oder 2, **dadurch gekennzeichnet, dass** die . Steuereinrichtung (16) eine Einzelwischstufe aufweist, in der jeweils ein einzelner Wischzyklus auslösbar ist, und die Empfindlichkeit (E) in dieser erhöht.

4. Regensensor und Steuereinrichtung (16) nach Anspruch 3, **dadurch gekennzeichnet, dass** die Steuereinrichtung (16) die Empfindlichkeit (E) dann erhöht, wenn seit dem letzten Wischzyklus eine längere Zeitspanne, insbesondere von mindestens 5 Sekunden, vergangen ist.

5. Verfahren zum Steuern einer Scheibenwischvorrichtung (18), insbesondere für ein Kraftfahrzeug, mit einem Messelement (12), dessen Empfindlichkeit (E) von einer Steuereinrichtung (16) vorgegeben wird, wobei eine Sendediode vorgesehen ist, die Licht in eine Scheibe (14) einkoppelt, welches auf einer trockenen Scheibe (14) totalreflektiert und auf einen Empfänger fokussiert wird, **dadurch gekennzeichnet, dass** der Steuereinrichtung (16) ein die Geschwindigkeit des Kraftfahrzeugs charakterisierendes Signal (v) zugeführt wird und die Empfindlichkeit (E) des Messelementes (12) bei niedrigerer Geschwindigkeit erhöht wird.

6. Verfahren nach Anspruch 5, **dadurch gekennzeichnet, dass** die Empfindlichkeit (E) erhöht wird, wenn die Geschwindigkeit klein, insbesondere kleiner als 5 km/h, vorzugsweise kleiner als 3 km/h ist.

7. Verfahren nach Anspruch 5 oder 6, **dadurch gekennzeichnet, dass** die Scheibenwischvorrichtung (18) einzelne Wischzyklen durchführt und die Empfindlichkeit (E) zwischen den Wischzyklen erhöht wird.

8. Verfahren nach Anspruch 7, **dadurch gekennzeichnet, dass** die Empfindlichkeit (E) dann erhöht wird, wenn seit dem letzten Wischzyklus eine längere Zeitspanne, insbesondere von mindestens 5 Sekunden vergangen ist.

## Claims

1. Rain sensor (10) and control device (16), in particular for a motor vehicle with a windscreen wiper device, comprising a measuring element (12) which has a sensitivity (E) that can be prescribed by the control device (16), there being provided a transmitting diode which couples into a windscreen (14) light which is totally reflected on a dry windscreen (14) and is focussed onto a receiver, **characterized in that** the control device (16) can be fed a signal (v) characterizing the speed of the motor vehicle, and the control device (16) raises the sensitivity (E) of the measuring element (12) in the case of relatively low speed.

2. Rain sensor and control device (16) according to Claim 1, **characterized in that** the control device (16) raises the sensitivity (E) whenever the speed is low, in particular less than 5 km/h, preferably less than 3 km/h.

3. Rain sensor (10) and control device (16) according to Claim 1 or 2, **characterized in that** the control device (16) has a single wiping stage in which in each case a single wiping cycle can be triggered, and raises the sensitivity (E) therein.

4. Rain sensor and control device (16) according to Claim 3, **characterized in that** the control device (16) raises the sensitivity (E) whenever a relatively long time interval, in particular of at least 5 seconds has elapsed since the last wiping cycle.

5. Method for controlling a windscreen wiper device (18), in particular for a motor vehicle, comprising a measuring element (12) whose sensitivity (E) is prescribed by a control device (16), there being provided a transmitting diode which couples into a windscreen (14) light which is totally reflected on a dry windscreen (14) and is focussed onto a receiver, **characterized in that** the control device (16) is fed a signal (v) characterizing the speed of the motor vehicle, and the sensitivity (E) of the measuring element (12) is raised in the case of relatively low speed.

6. Method according to Claim 5, **characterized in that** the sensitivity (E) is raised when the speed is low, in particular less than 5 km/h, preferably less than 3 km/h.

7. Method according to Claim 5 or 6, **characterized in that** the windscreen wiper device (18) carries out single wiping cycles, and the sensitivity (E) is raised between the wiping cycles.

8. Method according to Claim 7, **characterized in that** the sensitivity (E) is raised whenever a relatively long time interval, in particular of at least 5 seconds, has elapsed since the last wiping cycle.

## Revendications

1. Capteur de pluie (10) et installation de commande (16) notamment pour un véhicule automobile comportant un dispositif d'essuie-glace avec un élément de mesure (12) ayant une sensibilité (E) prédéfinie par l'installation de commande (16),
une diode d'émission étant prévue pour injecter de la lumière dans une vitre (14) subissant une réflexion totale sur la vitre sèche (14) et qui est focalisée sur un récepteur,
**caractérisés en ce que**
l'installation de commande (16) reçoit un signal (v) caractérisant la vitesse du véhicule et l'installation de commande (16) augmente la sensibilité (E) de l'élément de mesure (12) à une vitesse faible.

2. Capteur de pluie (10) et installation de commande (16) selon la revendication 1,
**caractérisés en ce que**
l'installation de commande (16) augmente la sensibilité (E) lorsque la vitesse est faible, notamment inférieure à 5 km/h et de préférence inférieure à 3 km/h.

3. Capteur de pluie (10) et installation de commande (16) selon la revendication 1 ou 2,
**caractérisés en ce que**
l'installation de commande (16) comporte un niveau d'essuyage intermittent selon lequel un seul cycle d'essuyage est déclenché et la sensibilité (E) est augmentée dans celui-ci.

4. Capteur de pluie (10) et installation de commande (16) selon la revendication 3,
**caractérisés en ce que**
l'installation de commande (16) augmente la sensibilité (E) si depuis le dernier cycle d'essuyage il s'est écoulé une période relativement longue, notamment de 5 secondes.

5. Procédé de commande d'un dispositif d'essuie-glace (18), notamment pour un véhicule automobile comportant un élément de mesure (12) dont la sensibilité (E) est prédéfinie par une installation de commande (16),
une diode émissive étant prévue pour injecter de la lumière dans une vitre (14), cette lumière subissant une réflexion totale sur une vitre sèche (14) et cette lumière est focalisée sur un récepteur,
**caractérisé en ce que**
l'installation de commande (16) reçoit un signal (v) caractérisant la vitesse du véhicule et la sensibilité (E) de l'élément de mesure (12) est augmentée à une faible vitesse.

6. Procédé selon la revendication 5,
**caractérisé en ce qu'**
on augmente la sensibilité (E) si la vitesse est faible, notamment inférieure à 5 km/h et de préférence inférieure à 3 km/h.

7. Procédé selon la revendication 5 ou 6,
**caractérisé en ce que**
le dispositif d'essuie-glace (18) exécute des cycles discontinus et augmente la sensibilité (E) entre les cycles.

8. Procédé selon la revendication 7,
**caractérisé en ce qu'**
on augmente la sensibilité (E) si depuis le dernier cycle d'essuyage il s'est écoulé une période relativement longuement, notamment d'au moins 5 secondes.
